# NEUE EUROPÄISCHE PATENTSCHRIFT

(11) **EP 2 746 732 B2**
(45) Veröffentlichungstag und Bekanntmachung des Hinweises auf die Entscheidung über den Einspruch: **07.03.2018**
(45) Hinweis auf die Patenterteilung: 25.02.2015
(21) Anmeldenummer: 12197769.8
(22) Anmeldetag: 18.12.2012
(51) Int. Cl.: G01D 5/244

(54) **Gebervorrichtung und Verfahren zur Bestimmung einer Position**
Transducer device and method for determining a position
Dispositif de transducteur et procédé destinés à la détermination d'une position

(43) Veröffentlichungstag der Anmeldung: 25.06.2014
(73) Patentinhaber: SICK AG, 79183 Waldkirch (DE)
(72) Erfinder: Moddemann, Jörg, 79350 Sexau (DE)
(74) Vertreter: Hehl, Ulrich

(56) Entgegenhaltungen:
- EP-A1- 1 569 347
- DE-A1- 3 046 797
- DE-A1- 10 152 427
- JP-A- 2006 266 727
- US-A1- 2009 251 134

## Beschreibung

Die Erfindung betrifft eine Gebervorrichtung und ein Verfahren zur Bestimmung einer Position eines ersten Objekts relativ zu einem gegenüber dem ersten Objekt beweglichen zweiten Objekt nach dem Oberbegriff von Anspruch 1 beziehungsweise 11.

Positionsgeber oder kurz Geber sind Sensoren, die eine Position eines Objekts oder zumindest ein Signal ausgeben, aus dem sich die Position des Objekts rekonstruieren lässt. Eine wichtige Klasse von Gebern bilden die Sin/Cos-Geber, die zwei analoge Ausgangssignale mit einem positionsabhängigen sinusförmigen beziehungsweise cosinusförmigen Verlauf zur Verfügung stellen. Die Phase und die Anzahl Perioden dieser Signale repräsentieren jeweils mit einem 90°-Versatz die gesuchte Position.

Man unterscheidet hierbei lineare und rotatorische Systeme. Ein Lineargeber bestimmt als Position die Verschiebung auf einer Achse. Ein Drehgeber oder Drehwinkelsensor dient dagegen der Erfassung eines Drehwinkels oder einer Winkelstellung beispielsweise einer Welle eines Antriebselements. Dabei wird jeweils eine Maßverkörperung abgetastet, die längs der linearen Achse beziehungsweise an der Welle mitdrehend angebracht ist. Die Maßverkörperung erzeugt über die Relativbewegung eine Intensitätsmodulation in einem Abtastsensor, die als Positionssignal genutzt wird.

Dazu werden verschiedenste Technologien eingesetzt. Optische Drehgeber verwenden eine Codescheibe mit als Code dienenden Öffnungen oder Reflexmarken, die das Signal eines Lichtsenders modulieren, so dass ein in Transmission oder Reflexion angeordneter Lichtempfänger Positionssignale empfängt. Bei einem magnetischen Geber wird beispielsweise die Veränderung des Magnetfelds bei Vorbeibewegen von codierenden Permanentmagneten mit einem Hallsensor detektiert. Weitere bekannte Systeme nutzen Maßverkörperungen und Abtastungen, die beispielsweise induktiv, kapazitiv oder nach noch anderen Modulations- und Abtastprinzipien arbeiten.

Es besteht eine steigende Nachfrage nach Gebern, die besondere Sicherheitsanforderungen erfüllen. In der Sicherheitstechnik werden strenge Bedingungen an die Zuverlässigkeit und Ausfallsicherheit von Sensoren gestellt, um beispielsweise in bestimmten Klassen (SIL, Safety Integrity Level) von Sicherheitsnormen wie der EN 61508 zugelassen zu werden. Typische Sicherheitsfunktionen sind Notausschaltungen, Abschalten überhitzter Geräte oder die Überwachung gefährlicher Bewegungen. Bei Geräten, die diese Anforderungen erfüllen sollen, muss gewährleistet sein, dass auch im Fehlerfall die weitere Funktion erhalten bleibt oder zumindest der Fehler sicher aufgedeckt wird, um eine Sicherheitsmaßnahme wie eine Notabschaltung einzuleiten.

Eine Möglichkeit, diesen Standards gerecht zu werden, bezieht sich auf die Redundanz und Diversität, was bedeutet, dass mehr als ein Sensorsystem in dem Geber verfügbar ist (Redundanz) und diese mehreren Sensorsysteme idealerweise nicht das gleiche Messprinzip verwenden (Diversität). Dadurch wird sichergestellt, dass bei Ausfall eines Sensorsystems der Geber weiterhin funktionsfähig ist und somit den geforderten Sicherheitsstandards genügt. Außerdem kann durch Vergleich der beiden Sensoren eine Fehlfunktion erkannt werden. Sofern dabei zwei physikalisch unterschiedliche Wirkprinzipien zum Einsatz kommen, beispielsweise ein optischer und ein magnetischer Geber, wird zwar eine hohe Sicherheit erreicht, jedoch um den Preis eines aufwändigen, baugroßen und kostenintensiven Gesamtsystems.

Es sind Geräte bekannt, in denen die Vektorlänge des durch den Sinus und Cosinus beschriebenen Vektors sicherheitstechnisch überwacht wird. Dadurch kann mit nur einem Geber ein gewisses Sicherheitsniveau erreicht werden. In sicherheitstechnischen Anwendungen als Drehgeber an einem Antrieb wird aber typischerweise zusätzlich gefordert, dass ein Ausfall des Gebersystems zugleich einen Halt des Antriebssystems bewirkt. Das wird erreicht, indem der Geber als sogenanntes Motorfeedbacksystem eingesetzt wird, in dem die Gebersignale zugleich für die Drehfelderzeugung des Antriebs essentiell sind, so dass deren Ausfall auch den Antrieb zum Halten bringt. Dies setzt eine Signalführung voraus, bei der die sicherheitstechnische Überwachung in Reihe zwischen den Geber und den Antrieb geschaltet ist. Eine Stichleitung zur parallelen sicherheitstechnischen Überwachung von der Leitung zwischen Geber und Antrieb dagegen wäre unzulässig. In diesem Fall würde nämlich eine Leitungsunterbrechung in der Stichleitung zum Verlust der sicherheitstechnischen Überwachung führen, obwohl der Antrieb weiterhin Signale vom Geber erhält und damit lauffähig bleibt.

Damit sind derartige bekannte Gebersysteme mit sicherheitstechnischer Überwachung auf eine Anwendung nur in Verbindung mit Motorfeedback beschränkt. Soll oder kann kein Motorfeedback genutzt werden, bleibt nur das Ausweichen auf ein echt redundantes oder sicheres Gebersystem mit entsprechend hohem Installations- und Geräteaufwand.

Weiterhin werden bei den herkömmlichen Gebersystemen mit sicherheitstechnischer Überwachung die Sinus- und Cosinusssignale für eine sicherheitstechnische Auswertung in einem Mikroprozessor in einem Analog/Digital-Wandler digitalisiert. Eine Überwachung auf Fehlfunktionen aufgrund der Vektorlänge erfordert eine entsprechend schnelle Digitalisierungs- und Auswertungsrate, damit auch nur temporäre Verletzungen der erlaubten Grenzen für die Vektorlänge erkannt werden können. Ansonsten wäre nämlich denkbar, dass an sich vorhandene unzulässige Abweichungen lediglich aufgrund der Unterabtastung nicht erfasst werden.

Aus der DE 101 52 427 A1 ist eine Vorrichtung zum Erfassen einer Anomalie in einer Positionserfassungseinrichtung bekannt. Die Vorrichtung umfasst eine Primärwicklung und zwei Sekundärwicklungsglieder, wodurch aus einem Erregersignal jeweils ein Sinussignal und ein Cosinussignal in Abhängigkeit einer Motorstellung induziert wird. Diese beiden Signale werden verstärkt, phasenverschoben und zu einem Kombinationssignal addiert, dessen Phase gegenüber dem Erregesignal die gesuchte Positionsinformation enthält. Das Kombinationssignal wird mit Hilfe eines Spitzenwerthaltekreises überwacht, um Anomalien der Vorrichtung zu erkennen.

Die US 2009/0251134 A1 offenbart einen Drehgeber, der mit Hilfe eines Magnetsensors die Drehstellung eines Zahnrads erkennt. Eine Selbstüberwachungseinheit ist in der Lage, bei ruhendem Zahnrad ein Signal in dem Magnetsensor zu erzeugen, um Fehler wie beispielsweise eine abnehmende Sensitivität aufzudecken. Dazu werden jeweils ein Maximal- und ein Minimalwert des Signals des Magnetsensors in einer Spitzenwerterkennungseinheit erfasst und deren Differenz und Mittelwert mit Referenzwerten verglichen.

Aus der DE 30 46 797 A1 ist ein elektrooptisches Messsystem mit Fehlerkorrektur bekannt, das auf einem Sinus- und einem Cosinussignal basiert. Es wird jeweils beim Nulldurchgang des Sinussignals der Signalwert des Cosinussignals bestimmt, beziehungsweise umgekehrt, und der Mittelwert der so bestimmten Sianalwerte wird zur Korrektur einer Gleichstromniveauverschiebung herangezogen.

Die EP 1 569 347 A1 offenbart einen Encoder mit einer Steuereinrichtung zur Fehleraufdeckung. Die Sensorsignale werden digitalisiert und daraus charakteristische Werte bestimmt und über die Zeit verfolgt, wie Amplitudenwert, Offsetwert, Signalverzerrung oder Phasenversatz. Es wird dann eine Ausfallwarnung ausgegeben, wenn ein charakteristischer Wert in einen kritischen Bereich zu laufen droht.

Es ist daher Aufgabe der Erfindung, die Zuverlässigkeit eines gattungsgemäßen Gebers zu erhöhen.

Diese Aufgabe wird durch eine Gebervorrichtung und ein Verfahren zur Bestimmung einer Position eines ersten Objekts relativ zu einem gegenüber dem ersten Objekt beweglichen zweiten Objekt nach Anspruch 1 beziehungsweise 112 gelöst. Dabei geht die Erfindung von dem Grundgedanken aus, ein erstes und ein zweites bei der Abtastung einer Maßverkörperung erfasstes Signal anhand von Extremwerten zu überwachen. Dazu wird eine Spitzenwerthalteeinrichtung (Peak Hold) eingesetzt, um einen Extremwert oder mehrere Extremwerte des ersten Signals beziehungsweise des zweiten Signals über ein gewisses Zeitintervall zu erfassen und zu speichern. Dieser Extremwert wird dann zur Bewertung des ersten Signals beziehungsweise des zweiten Signals der Funktionsüberwachung zugrunde gelegt. Die Überwachungseinheit mit der Spitzenwerthalteeinrichtung kann Teil des eigentlichen Gebers mit der Maßverkörperung und der Abtasteinrichtung, aber auch extern beispielsweise in einer Sicherheitssteuerung implementiert sein, welche das erste und zweite Signal von der Gebervorrichtung empfängt und gegebenenfalls eine Warnung oder ein Abschaltsignal erzeugt.

Die Erfindung hat den Vorteil, dass die Gebervorrichtung nicht auf Anwendungen mit Motorfeedback beschränkt ist. Durch die erfindungsgemäße Überwachung bleibt nämlich die Sicherheit auch bei einem Anschluss der sicherheitstechnischen Überwachung über eine Stichleitung gewährleistet. Zusätzliche Abtastsysteme zur Herstellung von Redundanz sind dazu nicht erforderlich. Dies ist vor allem bei externen sicherheitstechnischen Überwachungseinrichtungen vorteilhaft. Weiterhin entfällt eine durch die Digitalisierungs- und Auswertungsrate auferlegte Beschränkung der maximal erlaubten Signalfrequenz. Denn auch temporäre unzulässige Signalabweichungen werden wegen der Spitzenwerthalteeinrichtung erkannt. Eine Abhängigkeit von der Digitalisierungs- und Auswertungsrate besteht dabei nicht, diese bestimmen lediglich noch die minimale Fehlererkennungszeit. Damit wird eine besonders kostengünstige Herstellung ermöglicht, da die Anforderungen an den Analog-Digital-Wandler und den Auswertungsbaustein, beispielsweise einen Mikroprozessor, sinken. Insgesamt wird durch die Filterwirkung der Spitzenwerthalteeinrichtung die Auswertung im Vergleich zu der bekannten Überwachung der Vektorlänge aufgrund momentaner Sinus- und Cosinuswerte störunanfälliger.

Die Spitzenwerthalteeinrichtung ist dafür ausgebildet, einen Minimalwert und einen Maximalwert des ersten Signals und des zweiten Signals zu speichern. Es werden also vier Extremwerte erfasst, mit denen eine besonders zuverlässige Überwachung möglich wird. Dazu können wahlweise mehrere Spitzenwerthalteeinrichtungen oder eine entsprechend mehrkanalige und mehrspeicherfähige Spitzenwerthaltevorrichtung vorgesehen sein.

Das erste Signal ist bevorzugt ein Sinussignal, und das zweite Signal ist bevorzugt ein Cosinussignal oder umgekehrt. Die Gebervorrichtung wird damit zu einem Sin/Cos-Geber. Die Zuordnung des Sinussignals als erstes Signal und des Cosinussignals als zweites Signal dient nur der sprachlichen Fassbarkeit und ist technisch in dieser Beschreibung meist austauschbar.

Die Gebervorrichtung weist bevorzugt eine Auswertungseinheit zur Bestimmung der Position aus dem ersten Signal und dem zweiten Signal auf. Statt also erstes Signal und zweites Signal als solches auszugeben, wird eine Längsposition oder eine Winkelstellung berechnet und beispielsweise digital als geprüfte, verlässliche Position zur Verfügung gestellt. Die Position ist zunächst inkrementell, kann aber durch zusätzliche Codierung oder Aktualisieren einer Anfangsposition auch absolut bestimmt werden.

Die Überwachungseinheit ist dafür ausgebildet zu prüfen, ob die Extremwerte in einem Toleranzband verbleiben. Damit wird auf einfache Weise erkannt, ob in dem Zeitintervall, innerhalb dessen die Extremwerte von der Spitzenwerthalteeinrichtung erfasst wurden, zumindest kurzzeitig eine unzulässige Abweichung auftrat. Dabei kommt es nicht darauf an, mit welcher zeitlichen Auflösung das erste Signal und das zweite Signal digitalisiert werden, weil die Spitzenwerthalteeinrichtung auch die Werte zwischen zwei Abtastpunkten der Digitalisierung erfasst.

Die Überwachungseinheit ist bevorzugt dafür ausgebildet zu prüfen, ob sich Maximalwert und Minimalwert des ersten Signals und/oder Minimalwert und Maximalwert des zweiten Signals um einen Mindestwert voneinander unterscheiden. Ist das nämlich nicht der Fall, so ist eines der beiden Signale auf einem festen Wert stehen geblieben oder in der Amplitude wesentlich abgeschwächt. Ein solcher Fehler würde durch eine reine Überwachung der Vektorlänge anhand der momentanen Signalwerte nur bedingt erkannt.

Die Überwachungseinheit ist bevorzugt dafür ausgebildet, von der Spitzenwerthalteeinrichtung gespeicherte Extremwerte oder Differenzen von Extremwerten des ersten Signals mit einem Erwartungswert für Extremwerte oder Differenzen von Extremwerten des zweiten Signals zu vergleichen und/oder umgekehrt. Es lässt sich anhand der Extremwerte oder der Differenz von Maximalwert und Minimalwert des einen Signals vorhersagen, in welchem Bereich die Extremwerte oder die Differenz von Maximalwert und Minimalwert des anderen Signals bei fehlerfreiem Betrieb liegen müssten. Bei Sinus- und Cosinussignalen gibt das eine Signal die zu dem Zeitintervall der Erfassung durch die Spitzenwerthalteeinrichtung gehörige Phase vor, so dass dann die erwartete Schwankung des anderen Signals innerhalb dieser Phase berechnet werden kann. Wird die jeweilige Erwartung nicht getroffen, so liegt ein Fehler vor. Dabei kann das erste Signal die Erwartung erzeugen und das zweite Signal gegen diese Erwartung geprüft werden. Ebenso können dabei die Rollen der Signale vertauscht oder Vergleiche in beiden Richtungen vollzogen werden.

Die Überwachungseinheit ist bevorzugt dafür ausgebildet, den Erwartungswert für das eine Signal aus der Länge einer Kathete eines rechtwinkligen Dreiecks zu bestimmen, dessen Hypotenuse die Länge des absolut größten Extremwerts und dessen andere Kathete eine Länge zwischen Minimum und Maximum des anderen Signals aufweist. Hier stellt man also die Hypothese auf, dass der größte Extremwert die Vektorlänge beschreibt. Ein Vektor dieser Länge wird dann im Kreisdiagramm in einem Intervall verdreht, welches von den Extremwerten des einen Signals begrenzt ist, indem die Phase systematisch in dem Intervall variiert, auf dessen Randwerte oder auf irgend einen Wert innerhalb des Intervalls gesetzt wird. Über die trigonometrischen Beziehungen in einem rechtwinkligen Dreieck, dessen Hypotenuse die Vektorlänge und dessen eine Kathete durch den gewählten Wert in dem Intervall festgelegt ist, kann dann die andere Kathete und daraus durch Abziehen der Länge der anderen Kathete von der Vektorlänge die Erwartung an das andere Signal bei fehlerfreier Funktion berechnet werden. Auch hierbei sind die Rollen der beiden Signale vertauschbar. Alternativ kann die Hypotenuse auch aus anderen Größen bestimmt oder sogar als feste Größe angenommen werden, sofern sie als ausreichend konstant unterstellt werden kann.

Die Überwachungseinheit ist bevorzugt dafür ausgebildet, die Gebervorrichtung zyklisch auf Fehlfunktion zu prüfen und jeweils nach einem Prüfzyklus die Spitzenwerthaltevorrichtung zurückzusetzen. Die Fehleraufdeckung arbeitet also mit bestimmten Zeitintervallen. Die beiden Signale werden vorzugsweise innerhalb der Zyklen gar nicht überwacht, sondern lediglich deren Extremwerte mittels der Spitzenwerthaltevorrichtung erfasst. Erst zum Abschluss des Zyklus' findet dann eine summarische Auswertung für den vergangenen Zyklus anhand der Extremwerte statt. Anschließend wird die Spitzenwerthaltevorrichtung zurückgesetzt, um Extremwerte des folgenden Zyklus' erfassen zu können.

Die Spitzenwerthaltevorrichtung weist bevorzugt analoge Schaltelemente auf. Dabei handelt es sich insbesondere um einen Einweggleichrichter, der also im Minimalfall eine Diode und einen Kondensator aufweist. Durch die analoge Spitzenwerterfassung müssen lediglich noch die Extremwerte digitalisiert werden, was in wesentlich langsameren Abtastschritten geschehen kann, als bei einer direkten Überwachung der beiden Signale.

Die Gebervorrichtung ist bevorzugt als Drehgeber ausgebildet, indem die Maßverkörperung drehfest mit dem ersten Objekt und die Abtasteinrichtung drehfest mit dem zweiten Objekt verbundenen ist, wobei Maßverkörperung und Abtasteinrichtung jeweils gemeinsam mit dem ersten Objekt und dem zweiten Objekt relativ zueinander drehbeweglich sind, um als Position die Winkelstellung der Objekte zueinander zu bestimmen. Ein solcher Drehgeber mit sicherheitstechnischer Überwachung kann flexibel auch ohne Motorfeedback eingesetzt werden und gewährleistet dennoch die erforderliche Sicherheit.

Alternativ ist die Gebervorrichtung als Linearencoder mit einer langgestreckten Maßverkörperung und einer dazu längsverschieblichen Abtasteinrichtung ausgebildet. Damit kann die erfindungsgemäße Überwachung auch für derartige Anwendungen ausgenutzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1a: eine schematische Darstellung einer an ein Antriebssystem angeschlossenen Gebervorrichtung mit Sicherheitsüberwachung über eine Stichleitung;
- Fig. 1b: eine schematische Darstellung einer für Motorfeedback durch eine Sicherheitsvorrichtung an ein Antriebssystem angeschlossenen Gebervorrichtung;
- Fig. 2: eine Darstellung eines Cosinus- und eines Sinussignals mit zugehörigem Kreisdiagramm;
- Fig. 3: ein Kreisdiagramm eines Fehlerbildes, bei dem ein Signal konstant bleibt;
- Fig. 4: ein Kreisdiagramm eines Fehlerbildes, bei dem die Signale durch ein Offset verschoben sind;
- Fig. 5: ein Kreisdiagramm eines Fehlerbildes, bei dem ein Signal aufgrund zu geringer Amplitude für ein nur temporäres Verlassen des Toleranzbereichs sorgt;
- Fig. 6: ein Kreisdiagramm eines Fehlerbildes, bei dem der Toleranzbereich aufgrund eines Offsets nur temporär und nur nach innen hin verlassen wird;
- Fig. 7: ein Kreisdiagramm eines Fehlerbildes ähnlich Figur6, bei dem der Toleranzbereich aufgrund eines Offsets nur temporär nach innen und nach außen hin verlassen wird;
- Fig. 8: ein Kreisdiagramm eines Fehlerbildes ähnlich Figur 6, bei dem der Toleranzbereich aufgrund eines Offsets nur temporär verlassen wird, während die Amplitude zugleich stets am unteren Rand des Toleranzbereichs oder sogar darunter bleibt;
- Fig. 9: ein Kreisdiagramm zur Erläuterung der Erfassung zulässiger Signale mittels Spitzenwerterfassung; und
- Fig. 10: ein weiteres Kreisdiagramm zur Erläuterung der Erfassung zulässiger Signale anhand eines rechtwinkligen Dreieckes mit dem absolut größten Extremwert der Signale als Hypotenuse.

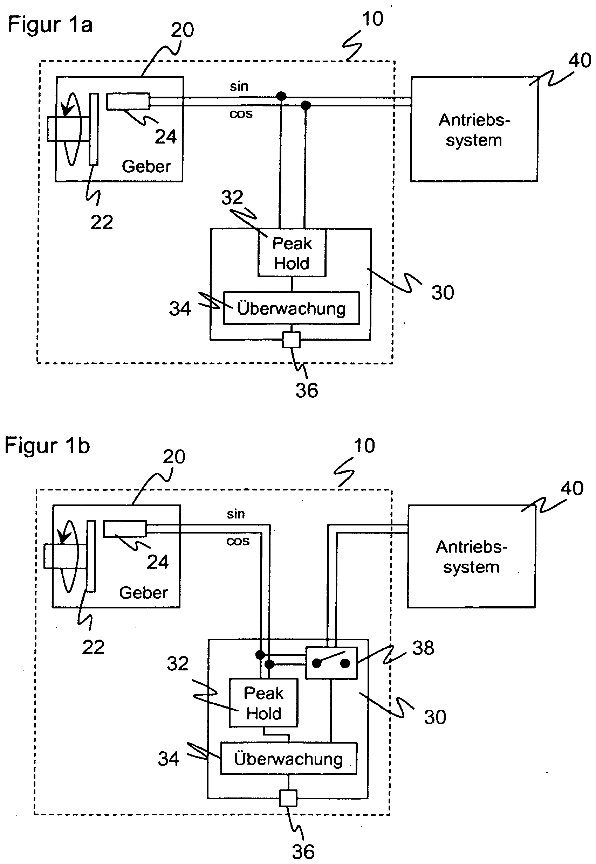

Figur 1a zeigt in einer schematischen Darstellung ein Gebersystem 10 mit einem Positionsgeber 20 und einer Überwachungseinheit 30. Der Positionsgeber 20 ist hier in einer bevorzugten Ausführungsform als Drehgeber ausgeführt. Alternativ wäre eine Ausgestaltung als Linearencoder denkbar.

Durch Drehung einer Maßverkörperung 22 werden zwei Ausgangssignale einer Abtasteinrichtung 24 sinus- beziehungsweise cosinusförmig moduliert. Die Modulation kann durch verschiedene Technologien von Maßverkörperung 22 und Abtasteinrichtung 24 beispielsweise in einem optischen, magnetischen, kapazitiven oder induktiven Positionsgeber 20 entstehen. Vor der Weitergabe können die beiden Signale noch vorverarbeitet beziehungsweise aufbereitet werden, also verstärkt, geglättet oder dergleichen.

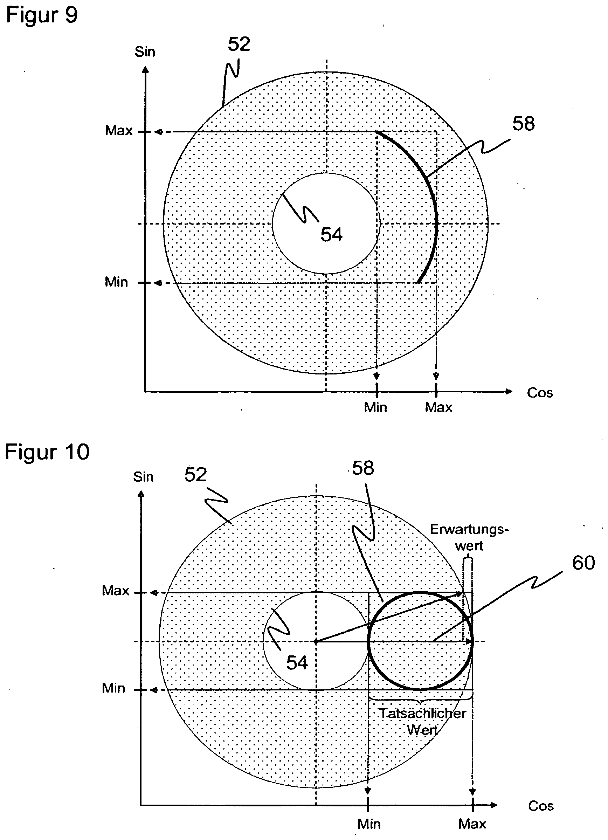

Die beiden Signale des Positionsgebers 20 können einem Antriebssystem 40 zugeführt werden. Dabei handelt es sich trotz der getrennten Darstellung meist um denselben Antrieb, dessen jeweilige Drehstellung der Positionsgeber 20 bestimmt. Über eine Stichleitung der Zuleitung zwischen Positionsgeber 20 und Antriebssystem 40 werden die beiden Signale außerdem in der Überwachungseinheit 30 ausgewertet. Dazu bestimmt eine Spitzenwerthalteeinrichtung 32 (Peak Hold) das jeweilige Minimum und Maximum beider Signale über einen Prüfzyklus. Die Spitzenwerthalteeinrichtung ist vorzugsweise analog ausgeführt, etwa nach dem Prinzip eines Einweggleichrichters mit einer Diode und einem Kondensator, wobei der so erfasste Erwartungswert für die weitere Verarbeitung in einem nicht gezeigten A/D-Wandler digitalisiert wird. Die somit entstehenden vier Extremwerte werden in einer eigentlichen Funktionsüberwachungseinheit 34 in einer im Zusammenhang mit den Figuren 9 und 10 genauer erläuterten Weise daraufhin überprüft, ob die beiden Signale noch in einem erwarteten Toleranzband fehlerfrei empfangen werden. Es erfolgt dann gegebenenfalls eine Warnung oder ein Abschaltsignal, welches an einem Ausgang 36 ausgegeben wird. Damit der Fehler auch dem Antriebssystem 40 bekannt wird, kann der Ausgang 36 direkt oder mittels einer übergeordneten Steuerung an das Antriebssystem 40 angeschlossen werden.

Figur 1b zeigt eine alternative Verschaltung des Gebersystems 10 mit dem Antriebssystem 40. Dabei wird die Überwachungseinheit 30 nicht über eine Stichleitung angeschlossen, sondern die beiden Signale werden durch die Überwachungseinheit 30 zu dem Antriebssystem 40 geführt. Das Gebersystem 10 wird hierbei als Motorfeedbacksystem eingesetzt. Das ist zwar erfindungsgemäß anders als im Stand der Technik keine Voraussetzung für die sichere Überwachung. Dennoch ist auch diese Einsatzart möglich.

Als zusätzliches Element enthält hier die Überwachungseinheit 30 einen Schalter 38, der allerdings kein echter Schalter sein muss, sondern auch in der Funktionsüberwachungseinheit 34 implementiert sein kann. Der Schalter 38 wird geöffnet und damit die Weiterleitung der beiden Signale an das Antriebssystem 40 unterbrochen, sobald eine Fehlfunktion festgestellt wurde.

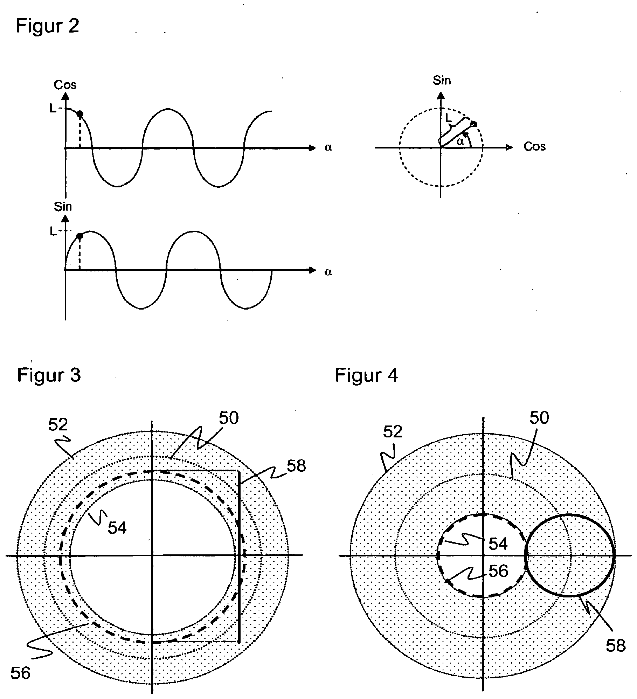

Figur 2 stellt zwei rein beispielhafte, von einem Positionsgeber 20 erzeugte Sinus- und Cosinussignale dar. Eine bestimmte, ebenfalls rein beispielhaft beliebig herausgegriffene Position L kann wie rechts in der Figur 2 gezeigt mit einem Kreisdiagramm illustriert werden. Dabei sind Sinus und Cosinus an den beiden Achsen aufgetragen, und ein Vektor L aus den beiden orthogonalen Sinus- und Cosinuskomponenten rotiert mit der Phase oder Drehstellung a. Derartige Kreisdiagramme werden im Folgenden benutzt, um aufzudeckende Fehler und dabei eingesetzte Vorgehensweisen zu veranschaulichen.

Denn die beiden Sinus- und Cosinussignale können eine Reihe von Fehlerbildern zeigen, die durch eine herkömmliche Vektorlängenüberwachung nicht erkannt werden, da sich die Signale auch im Fehlerfall noch im erlaubten Toleranzbereich befinden. Solche Fehler werden nach dem Stand der Technik über eine Verwendung als Motorfeedback beherrscht. Das ist zwar auch erfindungsgemäß möglich, wie zu Figur 1b erläutert, aber nicht notwendig. Vielmehr werden die nachfolgend gezeigten Fehler durch die Auswertung der Extremwerte aus der Spitzenwerthalteeinrichtung 32 aufgedeckt.

Figur 3 zeigt ein Kreisdiagramm für ein erstes Fehlerbild. Die zulässigen Werte für das Sinus- und Cosinussignal liegen in einem schraffiert dargestellten Toleranzband, welches durch eine mittlere Solllinie 50, eine äußere Begrenzungslinie 52 und eine innere Begrenzungslinie 54 bestimmt ist. Die von einem Vektorlängenverfahren fälschlich vermutete Kreisbahn wird mit einer gestrichelten Linie 56, der tatsächliche Signalverlauf dagegen mit einer durchgezogenen Linie 58 gezeigt. Zahlenwerte sind absichtlich nicht aufgetragen, da üblicherweise sämtliche Absolutwerte sowie die noch hinnehmbaren Toleranzen auf die jeweilige Anwendung parametriert werden. Alle folgenden Fehlerbilder in den Figuren 4 bis 8 sind nach diesem Prinzip aufgebaut und dementsprechend mit den gleichen Bezugszeichen versehen.

Bei dem Fehlerbild der Figur 3 ist eines der Signale, hier der Cosinus, bei einem festen Wert "eingefroren", bleibt also konstant. Statt eines Kreises wird deshalb von dem Vektor im Verlauf der Drehbewegung nur noch eine Linie 58 beschrieben. Der konstante Cosinuswert sorgt aber dafür, dass diese Linie 58 zu jedem Zeitpunkt im Toleranzband verbleibt. Die summarische Betrachtung über die Vektorlänge kann den Fehler nicht aufdecken. Dagegen wird der Fehler durch einen Vergleich zwischen dem in der Spitzenwerthalteeinrichtung 32 erfassten Minimum und Maximum des jeweiligen Signals erkannt.

Bei dem Fehlerbild der Figur 4 wird die tatsächliche Kreisbahn 58 durch ein Offset verschoben. Die gesamte verschobene Kreisbahn 58 bleibt aber innerhalb des Toleranzbereichs. Deshalb bleibt auch dieser Fehler einer summarischen Betrachtung über die Vektorlänge verborgen. Zur Erkennung solcher Fehler ist eine genauere Prüfung erforderlich, die unten im Zusammenhang mit den Figuren 9 und 10 erläutert wird.

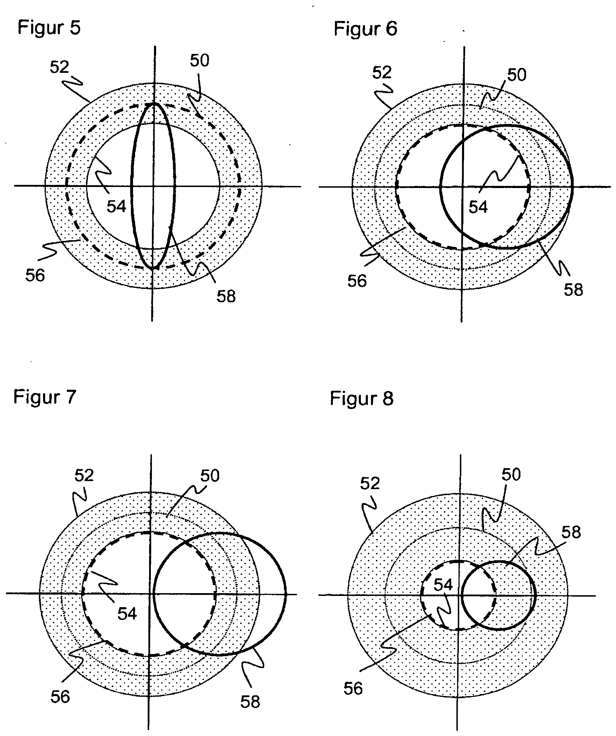

Während bei den Fehlerbildern gemäß Figur 3 und 4 die Vektorlänge sogar zu jedem Zeitpunkt innerhalb des Toleranzbereichs bleibt, zeigen die Figuren 5 bis 8 verschiedene Fälle, in denen der Toleranzbereich nur temporär verlassen wird. Auch das kann herkömmlich unbemerkt bleiben, wenn die Abtastrate zu klein ist und die Unterabtastung dafür sorgt, dass die geprüften Positionen gerade diejenigen innerhalb des Toleranzbereichs sind.

Hier zeigt Figur 5 ein Fehlerbild, bei dem eines der Signale mit zu geringer Amplitude schwingt, jedoch der resultierende Vektor um den Nulldurchgang des Signals geringer Amplitude von dem anderen Signal weiterhin in den Toleranzbereich gehoben wird. Figur 6 zeigt einen Fall eines Offsets, bei dem zwar anders als im Falle der Figur 4 nicht mehr die gesamte, sehr wohl aber noch ein Teil der tatsächlichen Kreisbahn 58 innerhalb des Toleranzbereichs liegt. Die Figuren 7 und 8 sind Varianten davon. In Figur 7 wird der Toleranzbereich temporär auch nach oben verlassen, und in Figur 8 bleibt die tatsächliche Kreisbahn 58 zu einem Großteil im Toleranzbereich, obwohl die Amplitude bei objektiver Betrachtung dafür kaum noch oder sogar nicht mehr ausreicht.

Temporäre Signale außer Toleranz wie in den Figuren 5 bis 8 werden herkömmlich deshalb nicht immer erkannt, weil die Abtast- und Auswertungsrate möglicherweise nicht schnell genug ist, um dies aufzulösen, beziehungsweise weil ein ungünstiges Verhältnis von Abtast- und Auswertungsrate zu Drehgeschwindigkeit durch Unterabtastung für ein Prüfen gerade immer für Signalanteile innerhalb des Toleranzbereiches sorgt. Aufgrund der Spitzenwerthalteeinrichtung 32 werden aber erfindungsgemäß solche auch nur temporären Abweichungen festgehalten und dann beim nächsten Auswertungszyklus erkannt. Dazu reicht schon eine Prüfung über die Vektorlänge aus. Solche temporären Abweichungen werden aber auch mit der genaueren Prüfung mit aufgedeckt, die nun anhand der Figuren 9 und 10 erläutert wird.

Figur 9 zeigt ein Kreisdiagramm zur Illustration der Auswertung der Extremwerte der Spitzenwerthalteeinrichtung 32. Das Toleranzband ist weiterhin schraffiert dargestellt, während eine durchgezogene Linie 58 den tatsächlichen Signalverlauf in demjenigen Zyklus oder Zeitintervall zeigt, in dem die Extremwerte erfasst wurden. Nach dem Auslesen der Extremwerte wird die Spitzenwerthalteeinrichtung 32 zurückgesetzt, um einen neuen Auswertungszyklus zu beginnen.

Die Extremwerte für den Signalverlauf 58 sind in Figur 9 durch gestrichelte Linien und an den Achsen eingezeichnet. Der Fehler gemäß Figur 3 wird sofort dadurch erkannt, dass ein Minimum und ein Maximum zusammenfallen, sich also nicht um einen Mindestwert unterscheiden. Ebenso darf keiner der Extremwerte außerhalb des Toleranzbandes liegen, da dies einem zumindest temporären Fehler entspricht, von dem die Figuren 5 bis 8 Beispiele zeigen.

In einer genaueren Prüfung wird der Hub der Signale überwacht, also die Differenz zwischen Maximum und Minimum. Zeigt das Sinussignal eine ausreichende Differenz, so wird auch von dem Cosinussignal eine entsprechende Differenz erwartet. Umgekehrt wird bei ausreichender Differenz des Cosinussignals eine entsprechende Differenz des Sinussignals erwartet. Damit werden insbesondere ein "Einfrieren" eines Signals wie in Figur 3 oder eine Verschiebung wie in Figur 4 erkannt. Vorzugsweise werden die beiden Prüfungen in beide Richtungen vorgenommen.

Dabei bedeutet die "entsprechende" erwartete Differenz des jeweils anderen Signals im Regelfall keine zahlenmäßig identische Differenz, sondern die Erwartung wird trigonometrisch abgeleitet. Das wird in Figur 10 anhand des Fehlerbildes gemäß Figur4 illustriert. Zunächst wird der betragsmäßig größte Erwartungswert als Vektorlänge 60 angenommen. Das ist hier das Maximum des Cosinus. Dieser Vektor hat nun im betrachteten Zeitraum nur den Winkelbereich überstrichen, der durch Minimum und Maximum des Sinus begrenzt wird. Die größtmögliche aufgetretene Differenz im Cosinussignal darf daher nur die mit Erwartungswert bezeichnete Länge sein. Dieser Erwartungswert berechnet sich in einer trigonometrischen Betrachtung über das rechtwinklige Dreieck, welches von der Vektorlänge als Hypotenuse und dem Minimum oder Maximum des Sinus als einer Kathete definiert ist. Dadurch kann die Länge der anderen Kathete und als deren Differenz zu der Vektorlänge der Erwartungswert berechnet werden. Nun ist aber in dem dargestellten Fall der eingezeichnete tatsächliche Wert der Schwankungsbreite des Cosinus größer als der Erwartungswert, woran der Fehler erkannt wird.

Somit wird die erwartete Differenz abhängig von der aktuellen Vektorlänge sowohl hinsichtlich einer Überschreitung als auch einer Unterschreitung schärfer überwacht. Der Erwartungswert kann für die beiden Randwerte, also wie in Figur 10 gezeigt für das Maximum des Sinus und zusätzlich für das Minimum des Sinus geprüft werden. Solange der Zyklus nicht zu groß ist, worauf für eine zuverlässige Überwachung vorzugsweise geachtet wird, werden damit die relevanten Fälle abgedeckt.

Es wurde zu Figur 10 eine Prüfung beschrieben, die über das Sinussignal Erwartungswerte festlegt, mit denen dann das Cosinussignal geprüft wird. Wie schon zuvor wird auch hier alternativ oder vorzugsweise zusätzlich eine umgekehrte Prüfung mit vertauschten Rollen der beiden Signale vorgenommen.

## Patentansprüche

1. Gebervorrichtung (10) zur Bestimmung einer Position eines ersten Objekts relativ zu einem gegenüber dem ersten Objekt beweglichen zweiten Objekt, wobei die Gebervorrichtung (10) eine mit dem ersten Objekt verbundene Maßverkörperung (22) und eine mit dem zweiten Objekt verbundenen Abtasteinrichtung (24) zur Erzeugung eines ersten Signals und eines zweiten Signals in Abhängigkeit von der Position aus einer Abtastung der Maßverkörperung (22) sowie eine Überwachungseinheit (30, 34) zur Erkennung einer Fehlfunktion der Gebervorrichtung (10) anhand des ersten Signals und des zweiten Signals aufweist, wobei die Überwachungseinheit (30) mindestens eine Spitzenwerthalteeinrichtung (32) aufweist,
**dadurch gekennzeichnet,**
**dass** die Spitzenwerthalteeinrichtung (32) dafür ausgebildet ist, einen Minimalwert und einen Maximalwert des ersten Signals und des zweiten Signals zu speichern und dass die Überwachungseinheit (30, 34) dafür ausgebildet ist zu prüfen, ob die Extremwerte in einem Toleranzband (50, 52, 54) verbleiben.

2. Gebervorrichtung (10) nach Anspruch 1,
wobei das erste Signal ein Sinussignal und das zweite Signal ein Cosinussignal ist oder umgekehrt.

3. Gebervorrichtung (10) nach Anspruch 1 oder 2,
die eine Auswertungseinheit zur Bestimmung der Position aus dem ersten Signal und dem zweiten Signal aufweist.

4. Gebervorrichtung (10) nach einem der vorhergehenden Ansprüche,
wobei die Überwachungseinheit (30, 34) dafür ausgebildet ist zu prüfen, ob sich Maximalwert und Minimalwert des ersten Signals und/oder Minimalwert und Maximalwert des zweiten Signals um einen Mindestwert voneinander unterscheiden.

5. Gebervorrichtung (10) nach einem der vorhergehenden Ansprüche,
wobei die Überwachungseinheit (30, 34) dafür ausgebildet ist, von der Spitzenwerthalteeinrichtung (32) gespeicherte Extremwerte oder Differenzen von Extremwerten des ersten Signals mit einem Erwartungswert für Extremwerte oder Differenzen von Extremwerten des zweiten Signals zu vergleichen und/oder umgekehrt, wobei der Erwartungswert angibt, in welchem Bereich die Extremwerte oder Differenzen von Extremwerten des jeweils anderen Signals bei fehlerfreiem Betrieb liegen müsste.

6. Gebervorrichtung (10) nach Anspruch 5,
wobei die Überwachungseinheit (30, 34) dafür ausgebildet ist, den Erwartungswert für das eine Signal aus der Länge einer Kathete eines rechtwinkligen Dreiecks zu bestimmen, dessen Hypotenuse die Länge des absolut größten Extremwerts und dessen andere Kathete eine Länge zwischen Minimum und Maximum des anderen Signals aufweist.

7. Gebervorrichtung (10) nach einem der vorhergehenden Ansprüche,
wobei die Überwachungseinheit (30, 34) dafür ausgebildet ist, die Gebervorrichtung (10) zyklisch auf Fehlfunktion zu prüfen und jeweils nach einem Prüfzyklus die Spitzenwerthaltevorrichtung (32) zurückzusetzen.

8. Gebervorrichtung (10) nach einem der vorhergehenden Ansprüche,
wobei die Spitzenwerthaltevorrichtung (32) analoge Schaltelemente aufweist, insbesondere mindestens eine Diode und mindestens einen Kondensator.

9. Gebervorrichtung (10) nach einem der vorhergehenden Ansprüche,
die als Drehgeber ausgebildet ist, indem die Maßverkörperung (22) drehfest mit dem ersten Objekt und die Abtasteinrichtung (24) drehfest mit dem zweiten Objekt verbundenen ist, wobei Maßverkörperung (22) und Abtasteinrichtung (24) jeweils gemeinsam mit dem ersten Objekt und dem zweiten Objekt relativ zueinander drehbeweglich sind, um als Position die Winkelstellung der Objekte zueinander zu bestimmen.

10. Gebervorrichtung (10) nach einem der Ansprüche 1 bis 8,
die als Linearencoder mit einer langgestreckten Maßverkörperung (22) und einer dazu längsverschieblichen Abtasteinrichtung (24) ausgebildet ist.

11. Verfahren zur Bestimmung einer Position eines ersten Objekts relativ zu einem gegenüber dem ersten Objekt beweglichen zweiten Objekt, wobei eine mit dem ersten Objekt verbundene Maßverkörperung (22) von einer mit dem zweiten Objekt verbundenen Abtasteinrichtung (24) abgetastet wird, um ein erstes Signal und ein zweites Signal in Abhängigkeit von der Position zu erzeugen, und wobei das erste Signal und das zweite Signal überwacht werden, um eine Fehlfunktion bei der Bestimmung der Position zu erkennen,
**dadurch gekennzeichnet,**
**dass** je ein Minimalwert und ein Maximalwert des ersten Signals und des zweiten Signals in einer Spitzenwerthalteeinrichtung (32) gespeichert wird, dass das erste Signal und das zweite Signal anhand der Minimal- und Maximalwerte überwacht werden und dass geprüft wird, ob die Minimal- und Maximalwerte in einem Toleranzband (50, 52, 54) verbleiben.

12. Verfahren nach Anspruch 11,
wobei geprüft wird, ob sich Maximalwert und Minimalwert des ersten Signals und Maximalwert und Minimalwert des zweiten Signals jeweils um einen Mindestwert voneinander unterscheiden.

13. Verfahren nach Anspruch 11 oder 12,
wobei die gespeicherten Minimal- und Maximalwerte des ersten Signals oder deren Differenz mit einem Erwartungswert für Minimal- und Maximalwerte des zweiten Signals oder deren Differenz verglichen werden und/oder umgekehrt, wobei der Erwartungswert angibt, in welchem Bereich die Extremwerte oder Differenzen von Extremwerten des jeweils anderen Signals bei fehlerfreiem Betrieb liegen müssten.

## Claims

1. A transducer (10) for determining a position of a first object relative to a second object movable with respect to the first object, wherein the transducer (10) has a material measure (22) connected to the first object and a scanning device (24) connected to the second object for generating a first signal and a second signal in dependence on the position from a scanning of the material measure (22) as well as a monitoring unit (30, 34) for recognising a malfunction of the transducer (10) with reference to the first signal and to the second signal, wherein the monitoring unit (30) has at least one peak value holding device (32),
**characterised in that** the peak value holding device (32) is configured to store a respective one minimal value and one maximum value of the first signal and of the second signal
and **in that** the monitoring unit (30, 34) is configured to check whether the extreme values remain in a tolerance band (50, 52, 54).

2. A transducer (10) in accordance with claim 1,
wherein the first signal is a sine signal and the second signal is a cosine signal or vice versa.

3. A transducer (10) in accordance with claim 1 or claim 2,
which has an evaluation unit for determining the position from the first signal and the second signal.

4. A transducer (10) in accordance with any one of the preceding claims, wherein the monitoring unit (30, 34) is configured to check whether the maximum value and minimal value of the first signal and/or the minimal value and maximum value of the second signal differ from one another by a minimum value.

5. A transducer (10) in accordance with any one of the preceding claims, wherein the monitoring unit (30, 34) is configured to compare extreme values or differences of extreme values of the first signal stored by the peak value holding device (32) with an expected value for extreme values or differences of extreme values of the second signal and/or vice versa, wherein the expected value indicates the range in which the extreme values or differences of extreme values of the respective other signal would have to lie in a defective operation.

6. A transducer (10) in accordance with claim 5,
wherein the monitoring unit (30, 34) is configured to determine the expected value for the one signal from the length of a leg of a right-angled triangle whose hypotenuse has the length of the absolutely largest extreme value and whose other leg has a length between a minimum and a maximum of the other signal.

7. A transducer (10) in accordance with any one of the preceding claims, wherein the monitoring unit (30, 34) is configured to test the transducer (10) cyclically for malfunctions and to reset the peak value holding apparatus (32) in each case after a test cycle.

8. A transducer (10) in accordance with any one of the preceding claims, wherein the peak value holding apparatus (32) has analogue switching elements, in particular at least one diode and at least one capacitor.

9. A transducer (10) in accordance with any one of the preceding claims, which is configured as a rotary encoder in that the material measure (22) is rotationally fixedly connected to the first object and the scanning device (24) is rotationally fixedly connected to the second object, wherein the material measure (22) and the scanning device (24) are each rotationally movable relative to one another together with the first object and with the second object to determine the angular position of the objects with respect to one another as the position.

10. A transducer (10) in accordance with any one of the claims 1 to 8, which is configured as a linear encoder having an elongated material measure (22) and a scanning device (24) longitudinally displaceable with respect thereto.

11. A method for determining a position of a first object relative to a second object movable with respect to the first object, wherein a material measure (22) connected to the first object is scanned by a scanning device (24) connected to the second object to generate a first signal and a second signal in dependence on the position and wherein the first signal and the second signal are monitored to recognise a malfunction in the determination of the position,
**characterised in that** a respective one minimal value and one maximum value of the first signal and of the second signal are stored in a peak value holding device (32);
**in that** the first signal and the second signal are monitored with reference to the minimal and maximum values;
and **in that** a check is made whether the minimal and maximum values remain in a tolerance band (50, 52, 54).

12. A method in accordance with claim 11,
wherein a check is made whether the maximum value and the minimal value of the first signal and the maximum value and minimal value of the second signal each differ from one another by a minimum value.

13. A method in accordance with claim 11 or claim 12,
wherein the stored minimum and maximal values of the first signal or their difference are compared with an expected value for minimal and maximum values of the second signal or their difference and/or vice versa, wherein the expected value indicates the range in which the extreme values or differences of extreme values of the respective other signal would have to lie in a defective operation.

## Revendications

1. Dispositif capteur (10) pour déterminer une position d'un premier objet par rapport à un second objet mobile par rapport au premier objet, dans lequel le dispositif capteur (10) comprend un élément de mesure matérialisé (22) relié au premier objet et un dispositif de palpage (24), relié au second objet, pour engendrer un premier signal et un second signal en fonction de la position à partir d'un palpage de l'élément de mesure matérialisé (22), ainsi qu'une unité de surveillance (30, 34) pour reconnaître un fonctionnement erroné du dispositif capteur (10) au moyen du premier signal et du second signal, dans lequel l'unité de surveillance (30) comprend au moins un dispositif de maintien de valeur de pointe (32),
**caractérisé en ce que**
le dispositif de maintien de valeur de pointe (32) est réalisé pour mémoriser à chaque fois une valeur minimale et une valeur maximale du premier signal et du second signal
et **en ce que** l'unité de surveillance (30, 34) est réalisée pour vérifier si les valeurs extrêmes restent dans une plage de tolérances (50, 52, 54).

2. Dispositif capteur (10) selon la revendication 1,
dans lequel le premier signal est un signal en sinus et le second signal est un signal en cosinus ou inversement.

3. Dispositif capteur (10) selon la revendication 1 ou 2, qui comprend une unité d'évaluation pour déterminer la position à partir du premier signal et du second signal.

4. Dispositif capteur (10) selon l'une des revendications précédentes, dans lequel l'unité de surveillance (30, 34) est réalisée pour vérifier si la valeur maximale et la valeur minimale du premier signal et/ou la valeur minimale et la valeur maximale du second signal diffèrent l'une de l'autre d'une valeur minimum.

5. Dispositif capteur (10) selon l'une des revendications précédentes, dans lequel l'unité de surveillance (30, 34) est réalisée pour comparer les valeurs extrêmes ou les différences de valeurs extrêmes, mémorisées dans le dispositif de maintien de valeur de pointe (32), du premier signal avec une valeur attendue pour des valeurs extrêmes ou des différences de valeurs extrêmes du second signal et/ou inversement, dans lequel la valeur attendue indique dans quelle région devraient se trouver les valeurs extrêmes ou les différences de valeurs extrêmes de l'autre signal respectif pour un fonctionnement sans erreur.

6. Dispositif capteur (10) selon la revendication 5,
dans lequel l'unité de surveillance (30, 34) est réalisée pour déterminer la valeur attendue pour l'un des signaux à partir de la longueur d'un côté d'un triangle rectangle dont l'hypoténuse présente la longueur de la valeur extrême absolument la plus élevée et dont l'autre côté présente une longueur entre le minimum et le maximum de l'autre signal.

7. Dispositif capteur (10) selon l'une des revendications précédentes, dans lequel l'unité de surveillance (30, 34) est réalisée pour vérifier le dispositif capteur (10) de façon cyclique quant à un fonctionnement erroné et pour remettre respectivement à zéro après un cycle de vérification le dispositif de maintien de valeur de pointe (32).

8. Dispositif capteur (10) selon l'une des revendications précédentes, dans lequel le dispositif de maintien de valeur de pointe (32) comprend des éléments de commutation analogiques, en particulier au moins une diode et au moins un condensateur.

9. Dispositif capteur (10) selon l'une des revendications précédentes, qui est réalisé sous forme de capteur rotatif, dans lequel l'élément de mesure matérialisé (22) est relié solidairement en rotation avec le premier objet et le dispositif de palpage (24) est relié solidairement en rotation avec le second objet, dans lequel l'élément de mesure matérialisé (22) et le dispositif de palpage (24) sont déplaçables en rotation l'un par rapport à l'autre respectivement conjointement avec le premier objet et avec le second objet, afin de déterminer à titre de position la situation angulaire des objets l'un par rapport à l'autre.

10. Dispositif capteur (10) selon l'une des revendications 1 à 8,
qui est réalisé sous forme de codeur linéaire avec un élément de mesure matérialisé (22) étiré en longueur et avec un dispositif de palpage (24) déplaçable longitudinalement par rapport à celui-ci.

11. Procédé pour la détermination d'une position d'un premier objet par rapport à un second objet déplaçable par rapport au premier objet, dans lequel un élément de mesure matérialisé (22) relié au premier objet est palpé par un dispositif de palpage (24) relié au second objet, afin d'engendrer un premier signal et un second signal en fonction de la position, et dans lequel le premier signal et le second signal sont surveillés afin de reconnaître un fonctionnement erroné lors de la détermination de la position,
**caractérisé en ce que**
une valeur minimale et une valeur maximale du premier signal et du second signal sont respectivement mémorisées dans un dispositif de maintien de valeur de pointe (32),
**en ce que** le premier signal et le second signal sont surveillés au moyen des valeurs minimales et des valeurs maximales
et **en ce que** on vérifie si les valeurs minimales et les valeurs maximales restent dans une plage de tolérances (50, 52, 54).

12. Procédé selon la revendication 11,
dans lequel on vérifie si la valeur maximale et la valeur minimale du premier signal et la valeur maximale et la valeur minimale du second signal diffèrent respectivement l'une de l'autre d'une valeur minimum.

13. Procédé selon la revendication 11 ou 12,
dans lequel les valeurs minimum et maximum mémorisées du premier signal ou leurs différences sont comparées avec une valeur attendue pour les valeurs minimales et maximales du second signal, ou leurs différences et/ou inversement, dans lequel la valeur attendue indique dans quelle zone devraient se trouver les valeurs extrêmes ou les différences de valeurs extrêmes de l'autre signal respectif lors d'un fonctionnement sans erreur.
